# EUROPÄISCHE PATENTSCHRIFT

(11) **EP 3 352 941 B1**
(45) Veröffentlichungstag und Bekanntmachung des Hinweises auf die Patenterteilung: **17.06.2020**
(21) Anmeldenummer: 16778739.9
(22) Anmeldetag: 30.09.2016
(51) Int. Cl.: B23K 37/00, B23K 26/14, B23K 26/244, B23K 26/70, B23K 26/60, B23K 101/00, B23K 101/18

(54) **VERFAHREN UND SYSTEM ZUM VERSCHWEISSEN ZWEIER BAUTEILE MIT EINEM LASERSTRAHLAUSTRITTSSCHUTZ**
METHOD AND SYSTEM FOR WELDING TWO COMPONENTS, COMPRISING A LASER BEAM OUTLET PROTECTION
PROCÉDÉ ET SYSTÈME DE SOUDURE DE DEUX ÉLÉMENTS COMPRENANT UNE PROTECTION DE SORTIE DE FAISCEAU LASER

(30) Priorität: 27.10.2015 DE 102015118326
(43) Veröffentlichungstag der Anmeldung: 01.08.2018
(73) Patentinhaber: Bayerische Motoren Werke Aktiengesellschaft, 80809 München (DE)
(72) Erfinder: VAN NIEKERK, Johann, 80993 München (DE); MEYNDT, George, 82515 Wolfratshausen (DE)
(74) Vertreter: Manitz Finsterwald Patent- und Rechtsanwaltspartnerschaft mbB
(86) Internationale Anmeldenummer: PCT/EP2016/073439
(87) Internationale Veröffentlichungsnummer: WO 2017/071907

(56) Entgegenhaltungen:
- DE-A1-102013 220 732
- JP-A- 2005 144 537
- JP-A- 2006 007 238
- US-A1- 2015 190 886

## Beschreibung

Die vorliegende Erfindung betrifft ein Verfahren zum Verschweißen zumindest eines ersten Bauteils mit einem zweiten Bauteil und ein System umfassend eine Laserschweißvorrichtung sowie zwei Bauteile gemäß dem Oberbegriff der Ansprüche 1 und 10 (siehe z.B. JP 2005 144537 A).

Verfahren zum Verschweißen zweier Bauteile sind grundsätzlich bekannt und werden beispielsweise im Fahrzeugbau verwendet, um eine stoffschlüssige Verbindung der zwei Bauteile zu erreichen. Hierzu werden beispielsweise Laser der Laserklasse 4 eingesetzt, die eine Gefährdung von umstehenden Personen oder in der Nähe befindlichen Gegenständen darstellen können, da auch diffus gestreute Strahlung eines solchen Lasers Schäden hervorrufen kann.

Um eine Schädigung von Personen oder Gegenständen zu vermeiden, ist es bekannt, dass Schweißvorgänge beispielsweise in einer Laserschutzkabine durchgeführt werden, innerhalb der sich keine Personen aufhalten. Alternativ kann ein Bauteil mit starkem Druck gegen eine Laseraustrittsöffnung gepresst werden, um das Austreten diffus gestreuter Strahlung soweit wie möglich zu unterbinden. Nachteiligerweise ist sowohl die Verwendung einer Laserschutzkabine als auch das Anpressen eines zu verschweißenden Bauteils an eine Laseraustrittsöffnung mit hohem Aufwand verbunden. Entweder wird eine Laserschutzkabine benötigt, die einen hohen Platzbedarf besitzt oder es muss eine aufwändige und damit teure Mechanik zum Anpressen an die Laseraustrittsöffnung vorhanden sein. Außerdem müssen bei der Verwendung einer Anpressmechanik die zu verschweißenden Bauteile zweiseitig zugänglich sein, was zu aufwändigeren Produktionsprozessen führen kann. Ferner wird insbesondere die Verwendung von manuell geführten Laserschweißgeräten bei der Verwendung einer Anpressvorrichtung durch deren Größe und Gewicht nahezu unmöglich gemacht.

Ein Schweißverfahren zur Verbesserung der Qualität von Schweißnähten zwischen einem ersten Bauteil und einem zweiten Bauteil ist aus der JP 2005 144537 A bekannt. Hierbei werden das erste Bauteil und das zweite Bauteil aufeinander gelegt, in engen Kontakt gebracht und entlang der zukünftigen Schweißlinie mit einer Wölbung in Richtung eines einen Laserstahl emittierenden Laserbearbeitungskopfes versehen.

Aus der US 2015/190886 A1 ist hingegen ein Laserbearbeitungskopf zur Bearbeitung eines Werkstücks mittels eines Laserstrahls bekannt, wobei zur Abschirmung des aus dem Laserbearbeitungskopf austretenden Laserstrahls an dem Laserbearbeitungskopf ein offenes Abschirmungsgehäuse vorgesehen ist, welches während eines Schweißvorgangs auf dem Werkstück aufliegt und dieses großflächig umgibt.

Es ist die der Erfindung zugrundeliegende Aufgabe, ein Verfahren zum Verschweißen zweier Bauteile anzugeben, welches einen auf einfache und kostengünstige Weise erzielbaren Schutz vor der eingesetzten Laserstrahlung bietet und zugleich einen flexiblen Einsatz eines Laserschweißgeräts, insbesondere auch bei manueller Führung, gestattet.

Diese Aufgabe wird erfindungsgemäß durch ein Verfahren gemäß Anspruch 1, und ein System gemäß Anspruch 10 gelöst.

Gemäß dem Verfahren der Erfindung
- wird das erste Bauteil mit einer ersten Erhöhung in einer ersten Oberfläche versehen,
- wird das zweite Bauteil zumindest im Bereich der ersten Erhöhung mit einer zweiten Oberfläche des ersten Bauteils in Kontakt gebracht,
- wird ein Laserschweißkopf mit einem Laserstrahlaustrittsschutz an das erste Bauteil angelegt, wobei der Laserstrahlaustrittsschutz eine Öffnung aufweist und die Größe der Öffnung an die Größe der ersten Erhöhung angepasst ist, wobei der Laserstrahlaustrittsschutz ein Schutzvolumen definiert und der Laserschweißkopf derart an das erste Bauteil angelegt wird, dass die erste Erhöhung zumindest bereichsweise in das Schutzvolumen hineinragt, und
- mittels des Laserschweißkopfes ein Laserstrahl auf die erste Erhöhung projiziert wird, um das erste Bauteil mit dem zweiten Bauteil stoffschlüssig zu verbinden.

Die Erfindung geht von der Erkenntnis aus, dass eine lokale Abschirmung des Laserstrahls auf einfache und damit kostengünstige Weise alleine mittels des Laserstrahlaustrittsschutz erzielt werden kann, wenn das erste Bauteil eine Erhöhung aufweist, die in den Laserstrahlaustrittsschutz hineinragt. Durch das Hineinragen wird der Laserstrahl innerhalb des Laserstrahlaustrittsschutzes gestreut und die gestreute Strahlung im Wesentlichen von dem Laserstrahlaustrittsschutz oder auch von dem ersten Bauteil absorbiert, wodurch nahezu keine Laserstrahlung an die Umgebung abgegeben wird.

Anders ausgedrückt kann ein Auftreffpunkt des Laserstrahls auf das erste Bauteil aufgrund der ersten Erhöhung in das Schutzvolumen hinein verlagert werden, wodurch der Auftreffpunkt von dem Laserstrahlaustrittsschutz und dem ersten Bauteil nahezu vollständig von der Umgebung abgeschirmt sein kann. Wie bereits erläutert, kann hierdurch ein unerwünschtes Austreten von Laserstrahlung aus dem Schutzvolumen bzw. aus dem Laserstrahlaustrittsschutz weitgehend vermieden werden. Insbesondere kann eine austretende Leistung derart gering sein, dass die gesetzlich festgelegten Grenzwerte für austretende Strahlung deutlich unterschritten werden.

Erfindungsgemäß wird folglich keine Laserschutzkabine und auch keine Anpressvorrichtung benötigt, allein das lokale "Abdichten" durch das Anliegen oder eine benachbarte Anordnung des Laserstrahlaustrittsschutzes an der ersten Oberfläche des ersten Bauteils kann für eine ausreichende Abschirmung des Laserstrahls genügen.

Die Größe des Laserstrahlaustrittsschutzes kann derart gewählt werden, dass der Laserstrahlaustrittsschutz an der nicht erhöhten Oberfläche des ersten Bauteils anliegt, wodurch sich die erste Erhöhung insbesondere vollständig innerhalb des Schutzvolumens und/oder vollständig (in der Ausbreitungsrichtung des Laserstrahls gesehen) innerhalb einer Anlagefläche des Laserstrahlaustrittsschutzes mit dem ersten Bauteil befinden kann. Im Vergleich zu einer Laserschutzkabine kann der Laserstrahlaustrittsschutz deutlich kleiner sein, als die Laserschutzkabine. Durch die erfindungsgemäße Verwendung des Laserstrahlaustrittsschutzes wird es somit ermöglicht die Investitionskosten und den Platz für die Laserschutzkabine einzusparen. Das erfindungsgemäße Verfahren trägt folglich zu einer deutlichen Reduzierung der Kosten von Schweißprozessen bei.

Mit dem erfindungsgemäßen Verfahren ist ein einseitiges Fügen der Bauteile möglich, welches z.B. durch Kurzimpulslaserschweißen durchgeführt werden kann. Die Dauer der einzelnen Laserpulse kann hierbei z.B. im Bereich von 0,1 bis 20 ms liegen.

Beim einseitigen Fügen trifft der Laserstrahl - wie erläutert - auf die erste Erhöhung des ersten Bauteils, wodurch das Material des ersten Bauteils im Bereich der ersten Erhöhung verflüssigt werden kann. Das zweite Bauteil ist mit dem ersten Bauteil in Kontakt, genauer gesagt liegt das zweite Bauteil an einer zweiten Oberfläche des ersten Bauteils an, wobei die zweite Oberfläche der ersten Oberfläche gegenüberliegt. Dasjenige Material des zweiten Bauteils, welches im Bereich der ersten Erhöhung mit dem ersten Bauteil in Kontakt steht, kann ebenfalls kurzzeitig durch den Laserstrahl verflüssigt werden, wodurch eine stoffschlüssige Schweißverbindung zwischen dem ersten und dem zweiten Bauteil entstehen kann. Insbesondere kann der Schweiß- bzw. Fügevorgang vollständig innerhalb des Schutzvolumens erfolgen, wodurch besonders wenig Strahlung nach außen dringen kann und eine Gefährdung von Personen oder umliegenden Gegenständen ausgeschlossen wird.

Bevorzugt wird der Laserstrahl von einem Laser der Laserklasse 4 erzeugt und kann beispielsweise eine Puls-Spitzenleistung von zumindest 10 kW aufweisen.

Vorteilhafte Weiterbildungen der Erfindung sind der Beschreibung, der Zeichnung sowie den Unteransprüchen zu entnehmen.

Gemäß einer ersten vorteilhaften Ausführungsform liegen ein Fokuspunkt des Laserstrahls und/oder ein Auftreffpunkt des Laserstrahls auf das erste Bauteil innerhalb des Schutzvolumens. Dies bedeutet, dass das erste Bauteil mit der Erhöhung zumindest zum Teil in das Schutzvolumen hineinragen muss, um das Material des ersten Bauteils im Fokuspunkt des Laserstrahls anzuordnen. Der Fokuspunkt und/oder der Auftreffpunkt können also einen Abstand von den nicht erhöhten Bereichen der ersten Oberfläche des ersten Bauteils und damit von einer Öffnung des Laserstrahlaustrittsschutzes aufweisen. Anders ausgedrückt kann der Fokuspunkt und/oder der Auftreffpunkt senkrecht beabstandet von einer Ebene liegen, die durch nicht erhöhte Bereiche der ersten Oberfläche definiert wird.

Der Fokuspunkt des Laserstrahls kann auch innerhalb des ersten oder zweiten Bauteils liegen, wodurch auch tiefer liegendes Material des ersten bzw. zweiten Bauteils erhitzt werden kann. Hierfür kann auch das zweite Bauteil zumindest zum Teil in das Schutzvolumen hineinragen.

Insbesondere weisen der Fokuspunkt und/oder der Auftreffpunkt einen Abstand von einer Öffnung bzw. einem Ende des Laserstrahlaustrittsschutzes auf, der zumindest 50 %, bevorzugt zumindest 100 %, besonders bevorzugt zumindest 150 %, der Dicke des ersten Bauteils entspricht. Die Dicke des ersten Bauteils wird dabei als die Abmessung des ersten Bauteils in der Richtung der Ausbreitung des Laserstrahls entlang einer zentralen Achse des Laserstrahls definiert. Der Abstand zu der Öffnung des Laserstrahlaustrittsschutzes wird in derselben Richtung definiert. Alternativ kann der Abstand von der Öffnung auch als absoluter Wert vorgegeben sein und beispielsweise etwa 1 mm oder 3 mm betragen.

Gemäß einer weiteren vorteilhaften Ausführungsform trifft der Laserstrahl nur einseitig auf genau eines der Bauteile und/oder liegt der Laserschweißkopf nur einseitig an genau einem der Bauteile an. Dies bedeutet, dass bei mehreren aufeinanderliegenden Bauteilen nur Zugriff auf die erste Oberfläche des ersten Bauteils vorhanden sein muss, um das einseitige Fügen zu ermöglichen.

Besonders bevorzugt wird beim Versehen des ersten Bauteils mit der ersten Erhöhung eine Vertiefung in einer zweiten Oberfläche des ersten Bauteils erzeugt. Die Erhöhung und die Vertiefung können in ihrer Form komplementär zueinander und in einer Draufsicht auf das Bauteil bevorzugt deckungsgleich angeordnet sein. Die Erhöhung und die Vertiefung können durch Biegen, Stanzen, Schlagbearbeitung und dergleichen geschaffen werden.

Bevorzugt wird das zweite Bauteil mit einer zweiten Erhöhung in einer ersten Oberfläche des zweiten Bauteils versehen, wobei die Form der zweiten Erhöhung an die Form der Vertiefung in dem ersten Bauteil angepasst ist und das zweite Bauteil mit der zweiten Erhöhung an der Vertiefung anliegt. Die zweite Erhöhung kann also derart in der ersten Oberfläche des zweiten Bauteils angeordnet sein, das ähnlich zu einem Stecker-Muffen-Prinzip (oder dem Lego-Prinzip) die zweite Erhöhung an die Vertiefung in der zweiten Oberfläche des ersten Bauteils angepasst ist. Das erste und das zweite Bauteil können dann durch Eingreifen der zweiten Erhöhung in die Vertiefung des ersten Bauteils eine provisorische Verbindung eingehen, die es insbesondere auch vereinfacht, eine gewünschte Relativposition der beiden Bauteile zueinander einzustellen. Grundsätzlich können in dem ersten Bauteil und dem zweiten Bauteil eine Vielzahl von Erhöhungen und an die Erhöhungen angepasste Vertiefungen vorgesehen sein, wobei das zweite Bauteil bevorzugt gleich viele Erhöhungen aufweist, wie das erste Bauteil Vertiefungen umfasst. Auch das zweite Bauteil kann wiederum Vertiefungen in seiner zweiten Oberfläche aufweisen, in die wiederum Erhöhungen eines dritten Bauteils eingreifen können. Auf diese Weise können Verbindungen nahezu beliebig vieler Bauteile geschaffen werden.

Gemäß einer weiteren vorteilhaften Ausführungsform bleibt die Projektion des Laserstrahls so lange gesperrt, bis ermittelt wird, dass die erste Erhöhung zumindest bereichsweise in das Schutzvolumen hineinragt. Durch die Sperrung des Laserstrahls wird die Sicherheit des Verfahrens weiter erhöht, da es nahezu unmöglich gemacht wird, den Laserstrahl auszulösen, wenn der Laserstrahlaustrittsschutz nicht an dem ersten Bauteil anliegt oder sich zumindest sehr nahe an dem ersten Bauteil befindet. Um zu erkennen, dass die Erhöhung in das Schutzvolumen hineinragt, kann ein entsprechendes Erkennungsmittel an dem Laserschweißkopf vorgesehen sein. Nach der Freigabe des Laserstrahls kann der Laserstrahl beispielsweise manuell ausgelöst werden. Alternativ kann die Projektion des Laserstrahls auch automatisch initiiert werden.

Besonders bevorzugt wird zumindest in das erste Bauteil ein Strom eingeprägt, wobei die Sperrung der Projektion des Laserstrahls aufgehoben wird, sobald der eingeprägte Strom in den Laserstrahlaustrittsschutz übertritt. Mittels des Stroms kann also festgestellt werden, ob der Laserstrahlaustrittsschutz an dem ersten Bauteil anliegt und somit ein Austreten des Laserstrahls aus dem Laserstrahlaustrittsschutz weitestgehend unmöglich ist. Ist dies der Fall, kann das Auslösen des Laserstrahls bzw. die Projektion des Laserstrahls ermöglicht bzw. freigegeben werden.

Der in das erste Bauteil eingeprägte Strom kann eine Codierung aufweisen oder gepulst sein, um eine versehentliche Freigabe des Laserstrahls bei der Detektion eines Fremdstroms zu vermeiden. Auf diese Weise kann die Sicherheit des Verfahrens nochmals erhöht werden. Insbesondere kann der Laserstrahlaustrittsschutz aus einem zumindest bereichsweise leitenden Material gebildet sein und mehrere Messstellen für den Strom aufweisen, wobei zur Freigabe des Laserstrahls an sämtlichen Messstellen ein Stromfluss vorliegen muss. Auf diese Weise kann sichergestellt werden, dass der Laserstrahlaustrittsschutz nahezu vollflächig auf der ersten Oberfläche des ersten Bauteils anliegt und ein Austreten des Laserstrahls aus dem Schutzvolumen bzw. dem Laserstrahlaustrittsschutz unterbunden wird.

Alternativ zur Verwendung eines eingeprägten Stromes kann die korrekte Positionierung der Erhöhung in dem Schutzvolumen auch beispielsweise durch eine Lichtschranke, durch Ultraschallabstandsmessung und/oder durch einen Drucksensor überprüft werden.

Gemäß einer weiteren vorteilhaften Ausführungsform wird der Laserschweißkopf manuell oder von einem Roboter, das heißt automatisch, bewegt. Aufgrund des Umstands, dass keine Laserschutzkabine und auch keine schwere und aufwändige Mechanik zur Erzeugung des Anpressdrucks benötigt wird, kann das Verfahren insbesondere auch bei der manuellen Handhabung des Laserschweißkopfes verwendet werden, wodurch das Verfahren auch bei individuellen Prozessabläufen oder bei Kleinserienfertigungen eingesetzt werden kann. Ebenfalls ist es möglich, den Laserschweißkopf aufgrund seiner geringen Größe ohne großen Aufwand an verschiedenen Robotern anzubringen, wodurch eine Umrüstung von bestehenden Produktionsstraßen stark vereinfacht wird. Eine solche Umrüstung wird auch dadurch vereinfacht, dass ein Laserschutz bereits durch das Schweißverfahren und den Laserschweißkopf gewährleistet wird, wodurch vorteilhafterweise keine zusätzlichen Schutzmaßnahmen getroffen werden müssen.

Gemäß einer weiteren vorteilhaften Ausführungsform werden zumindest drei Bauteile miteinander verschweißt, wobei das zweite Bauteil sowohl an dem ersten als auch an einem dritten Bauteil anliegt. Die drei Bauteile können beispielsweise in einer Sandwich-Struktur vorliegen, wobei das zweite Bauteil zwischen dem ersten und dem dritten Bauteil liegt. Grundsätzlich ist es auch möglich, beliebig viele Bauteile miteinander zu verschweißen. Beim Verschweißen von mehreren Bauteilen bildet sich jeweils ein Stapel aus sich abwechselnden Erhöhungen und Vertiefungen, wobei im Querschnitt gesehen alle Erhöhungen und Vertiefungen der Bauteile entlang einer geraden Linie angeordnet sein können.

Die Erfindung betrifft weiterhin ein System, welches eine Laserschweißvorrichtung und ein erstes Bauteil sowie ein zweites Bauteil umfasst. Das erste Bauteil weist eine erste Erhöhung in einer ersten Oberfläche auf und das zweite Bauteil steht zumindest im Bereich der ersten Erhöhung mit einer zweiten Oberfläche des ersten Bauteils in Kontakt. Das erfindungsgemäße System ist dazu ausgebildet, ein Verfahren der vorstehend erläuterten Art durchzuführen.

Die Laserschweißvorrichtung umfasst einen Laserschweißkopf, mittels welchem ein Laserstrahl emittierbar ist, und einen Laserstrahlaustrittsschutz, welcher ein Schutzvolumen definiert. Die Laserschweißvorrichtung zeichnet sich dadurch aus, dass ein Fokuspunkt des Laserstrahls innerhalb des Schutzvolumens liegt.

Anders ausgedrückt liegt eine Ebene, in welcher der Laserstrahlaustrittsschutz an einem Bauteil anliegen kann, beabstandet zu dem Fokuspunkt des Laserstrahls, da sich der Fokuspunkt innerhalb des Schutzvolumens befindet. Aufgrund der Anordnung des Fokuspunkts kann nur eine sehr geringe Leistung des Laserstrahls aus dem Schutzvolumen bzw. aus dem Laserstrahlaustrittsschutz austreten, da ein großer Raumbereich um den Fokuspunkt des Laserstrahls von dem Laserstrahlaustrittsschutz abgedeckt wird und ein übriger Raumbereich im Wesentlichen von dem ersten Bauteil abgedeckt werden kann. Bis zum Auftreffen auf das erste Bauteil kann der Laserstrahl vollständig innerhalb des Laserstrahlaustrittsschutzes geführt sein.

Gemäß der Erfindung weist der Laserstrahlaustrittsschutz eine Öffnung auf, die ausgebildet ist, die erste Erhöhung des ersten Bauteils aufzunehmen. Gemäß der Erfindung ist die Größe der Öffnung des Laserstrahlaustrittsschutzes an die Größe der Erhöhung des ersten Bauteils angepasst, wodurch eine automatische Zentrierung des Laserstrahlaustrittsschutzes über der ersten Erhöhung erfolgt. Auf diese Weise wird auf einfache Weise ein dichter Abschluss des Schutzvolumens erreicht. Die erste Erhöhung kann also abdichtend in dem Schutzvolumen aufgenommen werden.

Insbesondere kann der Laserstrahlaustrittsschutz eine Kegelstumpfform aufweisen, wobei die Öffnung durch die Deckfläche des Kegelstumpfes definiert sein kann. Die erste Erhöhung kann in der Draufsicht eine kreisförmige Kontur haben, wobei die Fläche der kreisförmigen Kontur der Fläche der Deckfläche entsprechen kann. Der Laserstrahlaustrittsschutz kann aus einem Metall oder einem anderen elektrisch leitenden Material geformt sein.

Gemäß einer weiteren vorteilhaften Ausführungsform umfasst die Laserschweißvorrichtung ein Detektionsmittel, welches ausgebildet ist, zu erkennen, ob die erste Erhöhung des ersten Bauteils zumindest bereichsweise in das Schutzvolumen ragt. Das Detektionsmittel kann beispielsweise ein Mittel zur Strom- und/oder Spannungsmessung sein, welches einen in das erste Bauteil eingeprägten Strom detektiert, wenn der Strom in den Laserstrahlaustrittsschutz übertritt.

Zu dem erfindungsgemäßen System gelten die zu dem erfindungsgemäßen Verfahren getroffenen Aussagen entsprechend, insbesondere hinsichtlich Vorteilen und bevorzugter Ausführungsformen.

Nachfolgend wird die Erfindung rein beispielhaft unter Bezugnahme auf die Zeichnung beschrieben. Es zeigt:

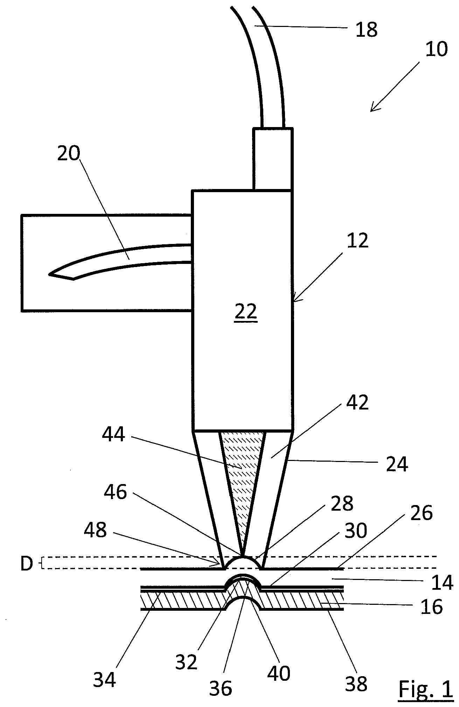

- Fig. 1: eine schematische Ansicht eines erfindungsgemäßen Systems mit einer Laserschweißvorrichtung und zwei Bauteilen.

Fig. 1 zeigt ein Schweißsystem 10 mit einer Laserschweißvorrichtung, von welcher ein Laserschweißkopf 12 gezeigt ist. Das Schweißsystem 10 umfasst ein im Wesentlichen ebenes erstes Bauteil 14 sowie ein im Wesentlichen ebenes zweites Bauteil 16, wobei das erste Bauteil 14 mit dem zweiten Bauteil 16 verschweißt werden soll.

Dem Laserschweißkopf 12 wird mittels einer Faser 18 von einem (nicht gezeigten) Laser-Generator ein Laserstrahl 44 zugeführt, wobei der Laser-Generator mittels eines Auslösehebels 20 aktiviert werden kann.

Der Laserschweißkopf 12 weist einen Grundkörper 22 auf, in welchem eine (ebenfalls nicht gezeigte) Optik sowie Steuerungskomponenten vorgesehen sind. Die Faser 18 ist an einem ersten Ende des Grundkörpers 22 an den Grundkörper 22 angeschlossen. An einem zweiten Ende des Grundkörpers 22, welches dem ersten Ende gegenüberliegt, ist ein Laserstrahlaustrittsschutz 24 vorgesehen, der durch eine kegelstumpfförmige Metallhülse gebildet wird.

Alternativ kann der Laserstrahlaustrittsschutz 24 beispielsweise auch durch einen metallischen Faltenbalg und dergleichen gebildet sein.

Das erste Bauteil 14 weist an seiner ersten Oberfläche 26 eine erste Erhöhung 28 auf. In einer zweiten Oberfläche 30 des ersten Bauteils 14 ist eine erste Vertiefung 32 vorgesehen, deren Form komplementär zu der ersten Erhöhung 28 ist, da die erste Vertiefung 32 und die erste Erhöhung 28 durch einen gemeinsamen Prägeprozess erzeugt wurden.

Das zweite Bauteil 16 weist in einer ersten Oberfläche 34 eine zweite Erhöhung 36 und in einer zweiten Oberfläche 38 eine zweite Vertiefung 40 auf. Die Form der ersten Erhöhung 28 entspricht der der ersten Erhöhung 36, wobei die erste Erhöhung 36 nahezu vollständig an der ersten Vertiefung 32 anliegt.

Zum Verschweißen des ersten Bauteils 14 mit dem zweiten Bauteil 16 werden die aneinander anliegenden Bauteile 14, 16 derart angeordnet, dass die erste Erhöhung 28 in den Laserstrahlaustrittsschutz 24 und damit in ein innerhalb des Laserstrahlaustrittsschutzes 24 definiertes Schutzvolumen 42 hineinragt.

Wenn die erste Erhöhung 28 in das Schutzvolumen 42 hineinragt, kann der Laserstrahlaustrittsschutz 24 an der ersten Oberfläche 26 anliegen, wie dies in Fig. 1 gezeigt ist.

In diesem Zustand wird ein in das erste Bauteil 14 eingeprägter Strom von einer (nicht gezeigten) Stromdetektionsvorrichtung des Laserschweißkopfes 12 nach dem Übertreten in den Laserstrahlaustrittsschutz 24 detektiert. Es wird also festgestellt, dass der Laserschweißkopf 12 derart angeordnet ist, dass ein Auslösen des Laserstrahls ungefährlich ist, woraufhin durch Betätigen des Auslösehebels 20 der Laserstrahl 44 ausgelöst werden kann. Der Laserstrahl 44 wird in den Laserstrahlaustrittsschutz 24 abgegeben und auf einen Fokuspunkt 46 projiziert, welcher etwa an der Oberfläche der ersten Erhöhung 28 liegt und in dem gezeigten Zustand zugleich auch ein Auftreffpunkt auf das erste Bauteil 14 ist.

Der Fokuspunkt 46 weist einen senkrechten Abstand D von einer Ebene auf, die durch die nicht erhöhten Bereiche der ersten Oberfläche 26 definiert wird. Folglich weist der Fokuspunkt 46 ebenfalls den Abstand D zu einer Öffnung 48 bzw. zu einem offenen Ende des Laserstrahlaustrittsschutzes 42 auf, da die Öffnung 48 (während des Verschweißens) auf der ersten Oberfläche 26 aufliegt.

Nach dem Auslösen schmilzt der Laserstrahl 44 das Material des ersten Bauteils sowie des zweiten Bauteils 16, welches sich im Bereich der Erhöhungen 28, 36 befindet und schweißt bzw. fügt die Bauteile 14, 16 aneinander. Der Fokuspunkt 46 kann nach dem Auslösen kontinuierlich tiefer in das erste Bauteil 14 verlagert werden, wodurch der Abstand D verringert wird.

Aufgrund des Aufliegens des Laserstrahlaustrittsschutzes 24 auf der ersten Oberfläche 26 kann keine nennenswerte Strahlung des Laserstrahls 44 aus dem Schutzvolumen 42 austreten, wodurch eine Gefährdung umstehender Personen oder von umliegenden Gegenständen ausgeschlossen werden kann.

### Bezugszeichenliste

- 10: Schweißsystem
- 12: Laserschweißkopf
- 14: erstes Bauteil
- 16: zweites Bauteil
- 18: Faser
- 20: Auslösehebel
- 22: Grundkörper
- 24: Laserstrahlaustrittsschutz
- 26: erste Oberfläche des ersten Bauteils
- 28: erste Erhöhung
- 30: zweite Oberfläche des ersten Bauteils
- 32: erste Vertiefung
- 34: erste Oberfläche des zweiten Bauteils
- 36: zweite Erhöhung
- 38: zweite Oberfläche des zweiten Bauteils
- 40: zweite Vertiefung
- 42: Schutzvolumen
- 44: Laserstrahl
- 46: Fokuspunkt
- 48: Öffnung

- D: Abstand

## Patentansprüche

1. Verfahren zum Verschweißen zumindest eines ersten Bauteils (14) mit einem zweiten Bauteil (16), wobei
- das erste Bauteil (14) mit einer ersten Erhöhung (28) in einer ersten Oberfläche (26) versehen wird,
- das zweite Bauteil (16) zumindest im Bereich der ersten Erhöhung (28) mit einer zweiten Oberfläche (30) des ersten Bauteils (14) in Kontakt gebracht wird,
- ein Laserschweißkopf (12) mit einem Laserstrahlaustrittsschutz (24) an das erste Bauteil (14) angelegt wird,
**dadurch gekennzeichnet, dass**
der Laserstrahlaustrittsschutz (24) eine Öffnung aufweist und die Größe der Öffnung an die Größe der ersten Erhöhung (28) angepasst ist, wodurch eine automatische Zentrierung des Laserstrahlaustrittsschutzes (24) über der ersten Erhöhung (28) erfolgt, wobei der Laserstrahlaustrittsschutz (24) ein Schutzvolumen (42) definiert und der Laserschweißkopf (12) derart an das erste Bauteil (14) angelegt wird, dass die erste Erhöhung (28) zumindest bereichsweise in das Schutzvolumen (42) hineinragt, und
- mittels des Laserschweißkopfes (12) ein Laserstrahl (44) auf die erste Erhöhung (28) projiziert wird, um das erste Bauteil (14) mit dem zweiten Bauteil (16) stoffschlüssig zu verbinden.

2. Verfahren nach Anspruch 1,
**dadurch gekennzeichnet, dass**
ein Fokuspunkt (46) des Laserstrahls (44) und/oder ein Auftreffpunkt des Laserstrahls (44) auf das erste Bauteil (14) innerhalb des Schutzvolumens (42) liegen.

3. Verfahren nach Anspruch 2,
**dadurch gekennzeichnet, dass**
der Fokuspunkt (46) und/oder der Auftreffpunkt einen Abstand (D) von einer Öffnung (48) des Laserstrahlaustrittsschutzes (24) aufweisen, der zumindest 50%, bevorzugt zumindest 100%, besonders bevorzugt zumindest 150%, der Dicke des ersten Bauteils entspricht.

4. Verfahren nach einem der vorstehenden Ansprüche,
**dadurch gekennzeichnet, dass**
der Laserstrahl (44) nur einseitig auf genau eines der Bauteile (14, 16) trifft und/oder der Laserschweißkopf (12) nur einseitig an genau einem der Bauteile (14, 16) anliegt.

5. Verfahren nach einem der vorstehenden Ansprüche,
**dadurch gekennzeichnet, dass**
beim Versehen des ersten Bauteils (14) mit der ersten Erhöhung (28) eine Vertiefung (32) in einer zweiten Oberfläche (30) des ersten Bauteils (14) erzeugt wird.

6. Verfahren nach Anspruch 5,
**dadurch gekennzeichnet, dass**
das zweite Bauteil (16) mit einer zweiten Erhöhung (36) in einer ersten Oberfläche (34) versehen wird, wobei die Form der zweiten Erhöhung (36) an die Form der Vertiefung (32) in dem ersten Bauteil (14) angepasst ist und das zweite Bauteil (16) mit der zweiten Erhöhung (36) an der Vertiefung (32) anliegt.

7. Verfahren nach einem der vorstehenden Ansprüche,
**dadurch gekennzeichnet, dass**
die Projektion des Laserstrahls (44) solange gesperrt bleibt, bis ermittelt wird, dass die erste Erhöhung (28) zumindest bereichsweise in das Schutzvolumen (42) hineinragt.

8. Verfahren nach Anspruch 7,
**dadurch gekennzeichnet, dass**
zumindest in das erste Bauteil (14) ein Strom eingeprägt wird, wobei die Sperrung der Projektion des Laserstrahls (44) aufgehoben wird, sobald der eingeprägte Strom in den Laserstrahlaustrittsschutz (24) übertritt.

9. Verfahren nach einem der vorstehenden Ansprüche,
**dadurch gekennzeichnet dass**,
zumindest drei Bauteile (14, 16) miteinander verschweißt werden, wobei das zweite Bauteil (16) sowohl an dem ersten (14) als auch an einem dritten Bauteil anliegt.

10. System (10) umfassend eine Laserschweißvorrichtung mit einem Laserschweißkopf (12), mittels welchem ein Laserstrahl (44) emittierbar ist sowie weiterhin umfassend ein erstes Bauteil (14) und ein zweites Bauteil (16), wobei das erste Bauteil (14) eine erste Erhöhung (28) in einer ersten Oberfläche (26) aufweist und das zweite Bauteil (16) zumindest im Bereich der ersten Erhöhung (28) mit einer zweiten Oberfläche (30) des ersten Bauteils (14) in Kontakt steht,
**dadurch gekennzeichnet, dass**
das System (10) einen Laserstrahlaustrittsschutz (24) aufweist, welcher ein Schutzvolumen (42) definiert, wobei ein Fokuspunkt (46) des Laserstrahls (44) innerhalb des Schutzvolumens (42) liegt, wobei der Laserstrahlaustrittsschutz (24) eine Öffnung (48) aufweist und die Größe der Öffnung (48) an die Größe der ersten Erhöhung (28) angepasst ist, wodurch eine automatische Zentrierung des Laserstrahlaustrittschutzes (24) über der ersten Erhöhung (28) erfolgt, wobei das System (10) ausgebildet ist, folgende Schritte durchzuführen:
- der Laserschweißkopf (12) mit dem Laserstrahlaustrittsschutz (24) wird an das erste Bauteil (14) derart angelegt, dass die erste Erhöhung (28) zumindest bereichsweise in das Schutzvolumen (42) hineinragt,
- mittels des Laserschweißkopfes (12) wird ein Laserstrahl (44) auf die erste Erhöhung (28) projiziert, um das erste Bauteil (14) mit dem zweiten Bauteil (16) stoffschlüssig zu verbinden,
um ein Verfahren gemäß einem der Ansprüche 1 bis 9 durchzuführen.

11. System (10) nach Anspruch 10,
**dadurch gekennzeichnet, dass**
die Öffnung (48) ausgebildet ist, die erste Erhöhung (28) des ersten Bauteils (14) aufzunehmen.

12. System (10) nach Anspruch 10 oder 11,
**dadurch gekennzeichnet, dass**
die Laserschweißvorrichtung ein Detektionsmittel umfasst, welches ausgebildet ist, zu erkennen, ob die erste Erhöhung (28) des ersten Bauteils (14) zumindest bereichsweise in das Schutzvolumen (42) ragt.

## Claims

1. A method of welding at least a first component (14) to a second component (16), wherein
- the first component (14) is provided with a first elevated portion (28) in a first surface (26);
- the second component (16) is brought into contact with a second surface (30) of the first component (14) at least in the region of the first elevated portion (28);
- a laser welding head (12) having a laser beam exit protection means (24) is applied to the first component (14),
**characterized in that**
the laser beam exit protection means (24) has an opening and the size of the opening is adapted to the size of the first elevated portion (28), whereby an automatic centering of the laser beam exit protection means (24) takes place above the first elevated portion (28), with the laser beam exit protection means (24) defining a protected volume (42) and the laser welding head (12) being applied to the first component (14) such that the first elevated portion (28) projects at least regionally into the protected volume (42); and
- a laser beam (44) is projected onto the first elevated portion (28) by means of the laser welding head (12) to connect the first component (14) to the second component (16) in a bonded manner.

2. A method in accordance with claim 1,
**characterized in that**
a focal point (46) of the laser beam (44) and/or a point of incidence of the laser beam (44) on the first component (14) is/are disposed within the protected volume (42).

3. A method in accordance with claim 2,
**characterized in that**
the focal point (46) and/or the point of incidence has/have a distance (D) from an opening (48) of the laser beam exit protection means (24) which corresponds to at least 50%, preferably to at least 100%, particularly preferably to at least 150%, of the thickness of the first component.

4. A method in accordance with any one of the preceding claims,
**characterized in that**
the laser beam (44) is incident on exactly one of the components (14, 16) at only one side and/or the laser welding head (12) contacts exactly one of the components (14, 16) at only one side.

5. A method in accordance with any one of the preceding claims,
**characterized in that**
a recess (32) is produced in a second surface (30) of the first component (14) when the first component (14) is provided with the first elevated portion (28).

6. A method in accordance with claim 5,
**characterized in that**
the second component (16) is provided with a second elevated portion (36) in a first surface (34), with the shape of the second elevated portion (36) being adapted to the shape of the recess (32) in the first component (14) and the second elevated portion (36) of the second component (16) contacting the recess (32).

7. A method in accordance with any one of the preceding claims,
**characterized in that**
the projection of the laser beam (44) remains blocked until it is determined that the first elevated portion (28) projects at least regionally into the protected volume (42).

8. A method in accordance with claim 7,
**characterized in that**
a current is at least imparted into the first component (14), with the blocking of the projection of the laser beam (44) being canceled as soon as the imparted current passes into the laser beam exit protection means (24).

9. A method in accordance with any one of the preceding claims,
**characterized in that**
at least three components (14, 16) are welded to one another, with the second component (16) contacting both the first component (14) and a third component.

10. A system (10) comprising a laser welding apparatus having a laser welding head (12), by means of which a laser beam (44) can be emitted, and further comprising a first component (14) and a second component (16), wherein the first component (14) has a first elevated portion (28) in a first surface (26) and the second component (16) is in contact with a second surface (30) of the first component (14) at least in the region of the first elevated portion (28),
**characterized in that**
the system (10) has a laser beam exit protection means (24) which defines a protected volume (42), with a focal point (46) of the laser beam (44) being disposed within the protected volume (42), with the laser beam exit protection means (24) having an opening (48) and the size of the opening (48) being adapted to the size of the first elevated portion (28), whereby an automatic centering of the laser beam exit protection means (24) takes place above the first elevated portion (28), and with the system (10) being configured to carry out the following steps:
- the laser welding head (12) having the laser beam exit protection means (24) is applied to the first component (14) such that the first elevated portion (28) projects at least regionally into the protected volume (42); and
- a laser beam (44) is projected onto the first elevated portion (28) by means of the laser welding head (12) to connect the first component (14) to the second component (16) in a bonded manner
in order to carry out a method in accordance with any one of the claims 1 to 9.

11. A system (10) in accordance with claim 10,
**characterized in that**
the opening (48) is adapted to receive the first elevated portion (28) of the first component (14).

12. A system (10) in accordance with claim 10 or claim 11,
**characterized in that**
the laser welding apparatus comprises a detection means which is configured to recognize whether the first elevated portion (28) of the first component (14) projects at least regionally into the protected volume (42).

## Revendications

1. Procédé de soudage d'au moins un premier composant (14) à un second composant (16), dans lequel
- le premier composant (14) est pourvu d'un premier bossage (28) dans une première surface (26),
- le second composant (16) est mis en contact avec une seconde surface (30) du premier composant (14), au moins dans la zone du premier bossage (28),
- une tête de soudage au laser (12) ayant une protection de sortie de faisceau laser (24) est appliquée sur le premier composant (14),
**caractérisé en ce que**
la protection de sortie de faisceau laser (24) présente une ouverture, et la taille de l'ouverture est adaptée à la taille du premier bossage (28), ce qui procure un centrage automatique de la protection de sortie de faisceau laser (24) au-dessus du premier bossage (28), la protection de sortie de faisceau laser (24) définissant un volume de protection (42), et la tête de soudage au laser (12) étant appliquée sur le premier composant (14) de telle sorte que le premier bossage (28) pénètre au moins localement dans le volume de protection (42), et
- un faisceau laser (44) est projeté sur le premier bossage (28) au moyen de la tête de soudage au laser (12) afin de relier par coopération de matière le premier composant (14) au second composant (16).

2. Procédé selon la revendication 1,
**caractérisé en ce que**
un point focal (46) du faisceau laser (44) et/ou un point d'impact du faisceau laser (44) sur le premier composant (14) sont situés à l'intérieur du volume de protection (42).

3. Procédé selon la revendication 2,
**caractérisé en ce que**
le point focal (46) et/ou le point d'impact se trouvent à une distance (D) d'une ouverture (48) de la protection de sortie de faisceau laser (24), qui correspond au moins à 50 %, de préférence à au moins 100 %, de manière particulièrement préférée à au moins 150% de l'épaisseur du premier composant.

4. Procédé selon l'une des revendications précédentes,
**caractérisé en ce que**
le faisceau laser (44) tombe sur précisément un des composants (14, 16) d'un seul côté, et/ou la tête de soudage au laser (12) est en appui contre précisément un des composants (14, 16) d'un seul côté.

5. Procédé selon l'une des revendications précédentes,
**caractérisé en ce que**
pendant que le premier composant (14) est pourvu du premier bossage (28), une cavité (32) est créée dans une seconde surface (30) du premier composant (14).

6. Procédé selon la revendication 5,
**caractérisé en ce que**
le second composant (16) est pourvu d'un second bossage (36) dans une première surface (34), la forme du second bossage (36) étant adaptée à la forme de la cavité (32) dans le premier composant (14), et le second composant (16) étant en appui contre la cavité (32) par le second bossage (36).

7. Procédé selon l'une des revendications précédentes,
**caractérisé en ce que**
la projection du faisceau laser (44) reste bloquée jusqu'à ce qu'il soit déterminé que le premier bossage (28) pénètre au moins localement dans le volume de protection (42).

8. Procédé selon la revendication 7,
**caractérisé en ce que**
un courant est appliqué au moins dans le premier composant (14), le blocage de la projection du faisceau laser (44) étant supprimé dès que le courant appliqué passe dans la protection de sortie de faisceau laser (24).

9. Procédé selon l'une des revendications précédentes,
**caractérisé en ce que**
au moins trois composants (14, 16) sont soudés les uns aux autres, le second composant (16) étant en appui aussi bien contre le premier composant (14) que contre le troisième composant.

10. Système (10) comprenant un dispositif de soudage au laser ayant une tête de soudage au laser (12) permettant d'émettre un faisceau laser (44), et comprenant en outre un premier composant (14) et un second composant (16), le premier composant (14) présentant un premier bossage (28) dans une première surface (26) et le second composant (16) étant mis en contact avec une seconde surface (30) du premier composant (14), au moins dans la zone du premier bossage (28),
**caractérisé en ce que**
le système (10) comprend une protection de sortie de faisceau laser (24) qui définit un volume de protection (42), un point focal (46) du faisceau laser (44) étant situé à l'intérieur du volume de protection (42), la protection de sortie de faisceau laser (24) présentant une ouverture (48), et la taille de l'ouverture (48) étant adaptée à la taille du premier bossage (28), ce qui procure un centrage automatique de la protection de sortie de faisceau laser (24) au-dessus du premier bossage (28), le système (10) étant réalisé pour mettre en oeuvre les étapes suivantes :
- la tête de soudage au laser (12) ayant la protection de sortie de faisceau laser (24) est appliquée sur le premier composant (14) de telle sorte que le premier bossage (28) pénètre au moins localement dans le volume de protection (42), et
- un faisceau laser (44) est projeté sur le premier bossage (28) au moyen de la tête de soudage au laser (12) afin de relier par coopération de matière le premier composant (14) au second composant (16),
afin de mettre en oeuvre un procédé selon l'une des revendications 1 à 9.

11. Système (10) selon la revendication 10,
**caractérisé en ce que**
l'ouverture (48) est réalisée pour recevoir le premier bossage (28) du premier composant (14).

12. Système (10) selon la revendication 10 ou 11,
**caractérisé en ce que**
le dispositif de soudage au laser comprend un moyen de détection qui est réalisé pour détecter si le premier bossage (28) du premier composant (14) pénètre au moins localement dans le volume de protection (42).
